# EUROPEAN PATENT APPLICATION

(11) **EP 2 285 079 A2**
(43) Date of publication of application: **16.02.2011**
(21) Application number: 10184716.8
(22) Date of filing: 14.01.2005
(51) Int. Cl.: H04M 1/725

(54) **A method, device or computer program for enabling communication from a remote party to a user of a device while the user participates in an active application at the device**

(62) Divisional of application: 05702342.6
(71) Applicant: Nokia Corporation, 02150 Espoo (FI)
(72) Inventor: Suomela, Riku, FIN-33240, Tampere (FI); Koivisto, Elina M, FIN-33720, Tampere (FI)
(74) Representative: Swindell & Pearson Limited

(57) **Abstract**

A method, a device and a computer program for enabling communication from a remote party to a user of a communications device while the user participates in an active application at the communications device, comprising: receiving at the communications device data relating to a communication from the remote party; and displaying at least a portion of the received data as an integral part of the active application while the user participates in the active application.

## Description

### FIELD OF THE INVENTION

Embodiments of the invention relate to methods, devices, computer programs for enabling communication from a remote party to a user of a device while the user participates in an active application at the device.

### BACKGROUND TO THE INVENTION

There is currently a problem with communication devices that are used as an application platform for example a game platform. While a user of the device is using an application, the application is interrupted whenever there is an incoming communication or communication attempt at the device. For example, if a user is using a mobile cellular telephone to play a game, whenever there is an incoming call to the telephone, the game is interrupted so that the user can choose to accept or reject the call.

This is problematic as it interrupts the user's enjoyment of the application. It is particularly problematic for real-time applications and interactive, multi-user applications such as multi-player games.

It would be desirable to provide a better way of satisfying the competing demands arising from the need to use the device to communicate and to use the device for the application.

It would be desirable to provide a better way of satisfying the competing demands arising from the use of device for both communication and gaming.

### BRIEF DESCRIPTION OF THE INVENTION

According to one embodiment of the invention there is provided a method of enabling communication from a remote party to a user of a device while the user participates in an active application at the device, comprising: receiving at the device data relating to a communication from the remote party; and displaying at least a portion of the received data as an integral part of the active application while the user participates in the active application.

According to another embodiment of the invention there is provided a device for receiving a communication from a remote party while a user of the device participates in an active application at the device, the device comprising: receiver means for receiving data relating to a communication from a remote party; application control means for controlling the application to display data as an integral part of the active application while the user participates in the active application; and interface means for receiving data relating to the communication via the receiver means and for initiating via the application control means the display of at least a portion of the data received as an integral part of the active application while the user participates in the active application.

According to a further embodiment of the invention there is provided a computer program which when loaded into a processor provides an application having at least a first state and a second state, the computer program comprising: application control means for controlling the application to display data as an integral part of the application while the application is being used; and interface means for receiving data relating to the communication and for initiating via the application control means the display of at least a portion of the data received as an integral part of the application while the application is being used.

According to another embodiment of the invention there is provided a computer program which when loaded into a processor provides an interface to an application that has at least a first state in which a user can participates in the application and a second state in which data is displayed as an integral part of the application while the user participates in the application, the computer program comprising: means for receiving data relating to a communication in a first format; and means for initiating a change in the state of the application from the first state to the second state, said initiating providing, in a second format, at least a portion of the data relating to a communication for display within the active application while the user participates in the active application.

According to a further embodiment of the invention there is provided a method of enabling communication from a remote party to a user of a communications device while the user participates in an active application at the communications device, the method comprising: calling, in response to receipt at the communications device of data relating to a communication from a remote party, a first method for changing a first state of an application to a second state and for providing at least a portion of the data received to the application; calling, in response to a first event specified by application and carried out within the application, a second method for changing the second state of the application to the first state; and calling, in response to user input specified by the application and carried out within the application, a third method for changing the second state of the application to a third state for enabling communication between the user of the communications device and the remote party.

According to another embodiment of the invention there is provided a computer program which when loaded into a processor of a device provides: means for calling, in response to receipt at the device of data relating to a communication from a remote party, a first method for changing a first state of an application to a second state and for providing at least a portion of the data received to the application for display as an integral part of the application; means for calling, in response to a first event specified by the application, a second method for changing the second state of the application to the first state; and means for calling, in response to user input specified by the application and carried out within the application, a third method for changing the second state of the application to a third state for enabling communication between the user of the communications device and the remote party.

According to a further embodiment of the invention there is provided a method of enabling communication from a remote party to a user of a communications device, comprising: receiving at the communications device data relating to a communication from the remote party; if the user is participating in an active application at the communications device, displaying at least a portion of the received data within the active application while the user participates in the active application; and if the user is not participating in an active application at the communications device providing an audible alert to the user.

### BRIEF DESCRIPTION OF THE DRAWINGS

For a better understanding of the present invention reference will now be made by way of example only to the accompanying drawings in which:
Fig. 1 schematically illustrates a communication device that is connected to a communication network;
Fig. 2 schematically illustrates the functional components of the communications device;
Fig. 3 schematically illustrates one of many examples for the physical components of the communications device; and
Fig. 4 illustrates a State Diagram for one embodiment of the application.

### DETAILED DESCRIPTION OF EMBODIMENTS OF THE INVENTION

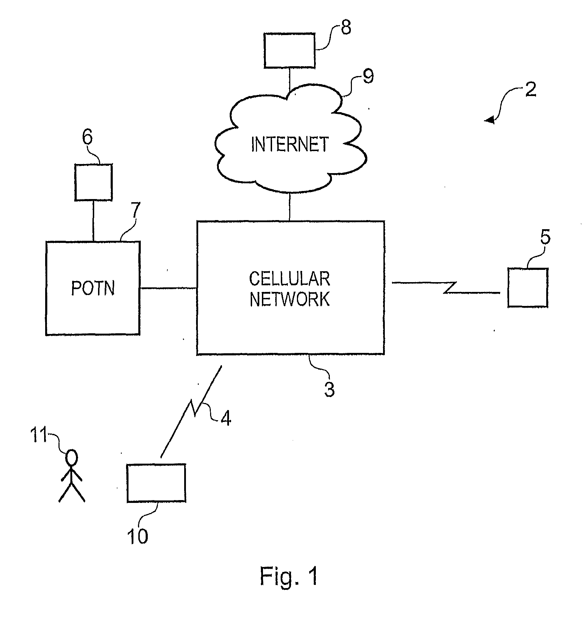

Fig. 1 schematically illustrates a communication device 10 that is connected to a communication network 2. In the example illustrated, the communication device 10 is a mobile cellular telephone terminal that is capable of communicating with a cellular telephone network 3 via a radio interface 4. In this example, the cellular telephone network 3 is also capable of communicating with a mobile cellular telephone 5 and also devices 6, 8 via the wired telephone network (POTN) 7 and the Internet 9 respectively.

A user 11 of the communication device 10 is able to communicate via the radio interface 4 and cellular telephone network 3 with another party. Such a party may, for example, be using any one of the devices 5, 6 or 8 or may be the operator of the cellular telephone network 3. The nature of this communication may be one-way or two way. If the communications is two-way then a duplex communication channel may be established via the radio interface 4.

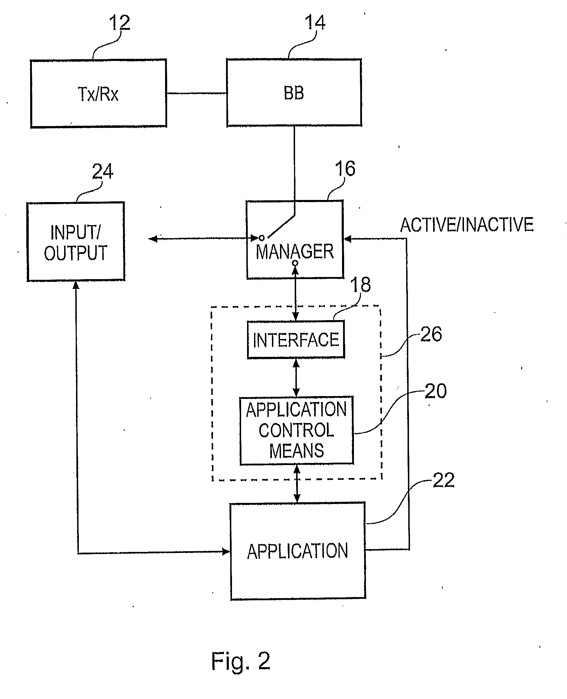

Fig. 2 schematically illustrates the functional components of the communications device 10. The functional components include a radio transceiver 12, baseband circuitry 14, a manager 16, interface means 18, an application control means 20, an application 22 and user input/output means 24. The interface means 18 and the application control means 20, as a combination, form an application programming interface (API) 26 for the application 22.

The radio transceiver 12 communicates with the cellular telephone network 3. The baseband circuitry 14 processes the data received from the radio transceiver 12 according to the particular protocol used by the cellular telephone network 3 and obtains the information sent over the network 3. This information may be user data that is intended for comprehension by the user 11 (e.g. a Short Message Service (SMS) message or an email), or it may be control data that is for comprehension by the device 10 (e.g. a paging message). A paging message is used to indicate that a party wishes to create a communication channel with the communication device 10 and will, for example, be received when there is an incoming telephone call.

If the application 22 is not being used when data is received via the transceiver 12 then the data is routed by the manager 16 to the user input/output means 24. The device then indicates the nature of the incoming data by displaying text or indicia on a display and/or producing an audible and/or vibrating alert. The response of the input/output means 24 to the output of the baseband circuitry 14 may be the same as is conventional in mobile cellular telephones.

If the application 22 is being used when data is received via the transceiver 12 then the data is routed by the manager 16 to the interface means 18. The interface means 18 communicates with the application control means, which communicates with the application 22. The application 22 is in communication with the input/output means 24.

The interface means 18 receives data relating to a radio communication in a first format via the cellular radio transceiver means 12 and baseband circuitry 14. It initiates via the application control means 20 a change in the state of the application 22 from the first state in which the user participates in the active application to a second state in which at least a portion of the data received is displayed as an integral part of the active application while the user participates in the active application. The application control means controls the transition of the application 22 between the first state and the second state. It forwards the data for display to the application 22 in a second format.

The communications device 10 can therefore have different responses when data is received via the radio transceiver 12 depending upon whether or not the application 22 is in active use. The presence of the API 26 allows the response, when the application 22 is in use, to be defined by the application 22 itself, so that different applications can have different responses without the application 22 having to comprehend the output of the baseband circuitry 14. The format of the output from the baseband circuitry 14 may vary from device manufacturer to device manufacturer. The API 26 converts this non-standard format into a standard format. This allows a common application to be used in different devices 10 so long as an API for that device intervenes between the application 22 and the manager 16 and converts the non-standard format to a standard format. The API may be included within the application 22 or provided separately.

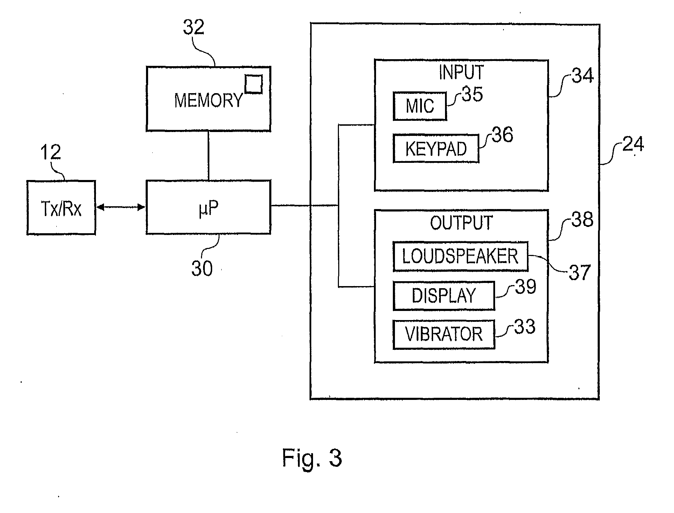

Fig. 3 schematically illustrates one of many examples for the physical components of the communications device 10. The device 10 comprises a processor 30, a memory 32, the radio transceiver 12, user input devices 34 including, for example, a microphone 35 and a keypad 36 and user output devices 38 including, for example, a loudspeaker 37, a display 39 and a vibrator 33. The processor 30 is connected in two-way communication with the memory 32 and with the radio cellular transceiver 12. It is also connected to provide command signals to the user output devices 38 and to receive input signals from the user input devices 34.

The memory 32 stores a computer program comprising computer program instructions 40 that control the operation of the communication device 10 when loaded into the processor 30. The memory 32 may be any suitable type of memory. The memory 32 includes computer program instructions 42 for the application 22 and API 26, which when loaded into the processor 12 enable a user to interact with the device 10 and use the application and enable the application 22 and device 10 to interact. The computer program instructions may arrive at the device 10 via an electromagnetic carrier signal or be copied from a physical entity 44 such as a computer program product, a memory device or a record medium such as a CD-ROM or DVD.

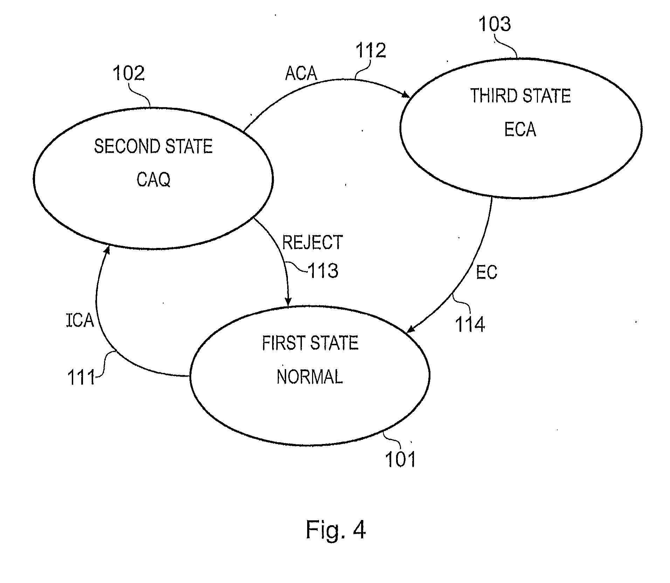

Fig. 4 illustrates a State Diagram for one embodiment of the application 22. The application may be in any one of a first state 101, a second state 102 and a third state 103. The second state 102 is entered from the first state 101, the third state 103 is entered from the second state 102 and the second state 102 is entered from the first state 101 or the third state 103.

The first state 101 is a Normal state in which the user participates in the application.

The second state 102 is entered from the first state when data relating to a communication from a remote party is received at the communication device 10. As the application 22 is active, the received data is received at the interface means 18 via the manager 16, base band circuitry 14 and radio transceiver 12. An IncomingCommunicationAttempt (ICA) method 111 is called by the interface means 18 and the application 22 reacts to this method call by changing state. The method call also provides at least a portion of the received data relating to the communication to the application 22.

The ICA method 111 typically has the following parameters: TYPE, FROM, CONTENT, HANDLE. The TYPE parameter indicates the communication type e.g. SMS, email, telephone call etc. The FROM parameter indicates the origin of the communication. The CONTENT parameter contains all or a portion of the received data relating to the communication and the HANDLE, which is optional, enables access to a remaining portion of the received data relating to the communication. For an SMS message, the CONTENT parameter may contain the whole message, whereas for an email, the CONTENT parameter may contain header information such as the subject and importance, while the HANDLE enables access to the email body.

The second state 102 is a CommunicationAttemptQuery (CAQ) state. In this state a portion of the received data is displayed within the active application 22 as an integral portion of the user interface (UI) provided by the active application via the display 39 while the user participates in the active application using the UI in the display 39. The manner in which the data portion is integrated within the UI of the application is determined by the programming of the application 22 and can vary from application to application. It may also depend upon other factors such as the communication type, the originator of the communication or the importance of the communication.

The third state 103 is entered from the second state 102 in response to an event specified by the application 22 and carried out within the application 22. The event is typically a defined user input to the radio communications device that is made while using the application. In response to the event, an AcceptCommunication Attempt (ACA) method 112 is called by the application control means 20 and the application 22 reacts to this method call by changing state. The interface means 18 may also react to this method call by sending a message to the base band circuitry if appropriate. For example, if the event is answering an incoming telephone call then the message sent by the interface means accepts the call.

The third state is an ExternalCommunicationsActive (ECA) state. This state enables communication between the user of the radio communications device 10 and the remote party. This state may, for example, enable a reply to a received SMS message or email or alternatively enable the establishment of a duplex communication channel for a telephone call.

In one embodiment, the third state may interrupt and exit the application 22 to allow a user to communicate with the party in the normal manner. When the communication has finished the application is re-entered and continued from the point of interruption.

In another embodiment, the third state 103 does not interrupt or exit the application, but a communication interface is provided within the UI of the application 22, while the application remains active. The manner in which the communication interface is integrated within the UI of the application is determined by the programming of the application 22 and can vary from application to application. It will also depend upon the communication type.

The first state 101 is entered from the second state in response to an event specified by the application 22 and carried out within the application 22. The defined event may be a defined user input to the radio communications device or, alternatively, the expiration of a timeout period since changing the state of the application from a first state 101 to a second state 102. In response to the specified event, a Reject method 113 is called by the application control means 20 and the application 22 reacts to this method call by changing state. The interface means 18 may also react to this method call by sending a message to the base band circuitry, if appropriate. For example, if the event rejects an incoming telephone call then the message sent by the interface means rejects the call.

The first state 101 is entered from the third state when the communication between the user and party is terminated. If the communication is a reply, this termination may occur when the reply is sent. In response to the reply an EndCommunication 114 method is called by the application control means 20 and the application 22 reacts to this method by changing state. If the communication is a telephone call over a duplex communication channel then either the user or the remote party may terminate the call. If the user terminates the call, an EndCommunication 114 method is called by the application control means 20. The application 22 reacts to this method by changing state and the interface means 18 reacts to this message by sending a termination message to the base band circuitry 14. If the remote party terminates the call, a termination message is received at the interface means 18 via the manager 16, base band circuitry 14 and the radio transceiver 12 and an EndCommunication method 114 is called by the interface means 18. The application 22 reacts to this method call by changing state.

The method calls form the basis of the application program interface (API) 26 and can be referenced by the application 22. The application 22 may be designed as a plurality of components. Each component may register with the API 26 to be informed about the calling of any one or more of the methods ICA 111, ACA 112, Reject 113 or EC 114. It is also possible to register particular components only for method calls relating to certain communication types.

Embodiments of the invention are particularly useful for game applications, as any radio communication attempt can be shown during game play and merged to be part of the game itself without affecting the game directly.

When the game application 22 is in the second state the portion of the received data is presented as an integral part of the game play while the user plays the game.

The manner in which the data portion is integrated within the game play is determined by the programming of the game application 22 and can vary from game application to game application. It may also depend upon other factors such as the communication type, the originator of the communication or the importance of the communication.

Examples of games include first person perspective games, role playing games, board games and arcade games. The invention has particular application for real-time interactive multiplayer games.

Such a game typically comprises one or more "user gaming objects". A "user gaming object" is an object that is apparent to the user(s) of the game and which participates in the game play in a manner controlled by the user. It could for example be a character in a role playing game. Each user gaming object may have one or more attributes. An "attribute" is a characteristic of a gaming object that affects its participation or appearance in a game. Such a game may also comprise one or more "gaming objects". A "gaming object" is an object that is apparent to the user(s) of the game. It could for example be a object in the game or an aspect of the background. Each gaming object may have one or more attributes. An "attribute" is a characteristic of a gaming object that affects its appearance in a game.

The data portion may be integrated within the game play, by for example, using the user gaming object to present the data portion or a gaming object to present the data portion. For example, a homing pigeon or postman carrying the message may appear on screen. The attributes of the user gaming object and or the gaming objects may also be adapted to alert the user to the data.

The data portion displayed in the second state will depend upon the TYPE of communication identified in the ICA method call. For example, for a phone call or a video phone call the caller's name may be displayed, for an SMS message or instant message the sender's name and the message body may be displayed and for an email the senders name, the subject and the importance may be displayed.

The application may provide on-going communication while the application is in the third state while the user plays the game. For example, if the communication is a telephone call the microphone and speakers are used for the phone conversation while the user plays the game. If the communication is a video phone call microphone and speakers are used for the phone conversation while a communication UI is provided within the game, for example as the game background or as a gaming object, and is used to display the received video. If the communication is an SMS or instant messaging then a communication UI is provided within the game, for example as a gaming object, which the user can use to compose a reply message. If the communication is an email, then a communication UI is provided within the game which is used to display the body of the email message.

Although embodiments of the present invention have been described in the preceding paragraphs with reference to various examples, it should be appreciated that modifications to the examples given can be made without departing from the spirit and scope of the invention.

According to some, but not necessarily all embodiments of the invention, there is provided, a method of enabling communication from a remote party to a user of a device while the user participates in an active application at the device, comprising receiving at the device data relating to a communication from the remote party and displaying at least a portion of the received data as an integral part of the active application while the user participates in the active application.

The method may further comprise changing the state of the application from a first state in which the user participates in the active application to a second state in which at least a portion of the received data is displayed as an integral part of the active application while the user participates in the active application.

The method may further comprise changing, in response to a first defined user input to the device, the state of the active application from the second state to a third state for enabling communication between the user of the device and the remote party.

The received data may comprise a first portion and a second portion and the first portion of the received data may be displayed in the second state and the second portion may be displayed in the third state.

The first portion may contain information identifying the content and/or origin of the second portion.

The third state may enable the establishment of a duplex communication channel between the device and the remote party.

The received data may be a paging signal for establishing a duplex communication channel.

The third state may enable communication from the user of the device to the remote party.

The third state may enable communications to the remote party while the user participates in the active application.

The third state may result in the user exiting the application for communication with the remote party.

The third state may be dependent upon the communication type of the communication from the remote party.

The method may further comprise changing, in response to a defined event, the state of the active application from the second state to the first state.

The defined event may be a user input to the device or the expiration of a timeout period since changing the state of the application from the first state to the second state.

The manner of displaying the received data as an integral part of the active application may be dependent upon the communication type of the communication from the remote party.

The application may be a game having game play and the display of the received data may be integrated within the game play.

The displayed portion of the received data may identify the remote party.

According to some, but not necessarily all embodiments of the invention, there is provided a device for receiving a communication from a remote party while a user of the device participates in an active application at the device, the device comprising receiver means for receiving data relating to a communication from a remote party, application control means for controlling the application to display data as an integral part of the active application while the user participates in the active application' and interface means for receiving data relating to the communication via the receiver means and for initiating via the application control means the display of at least a portion of the data received as an integral part of the active application while the user participates in the active application.

The application control means may be operable to control the transition of an application between a first state in which the user participates in the active application to a second state in which data is displayed as an integral part of the active application while the user participates in the active application.

The interface means may be operable to receive, in a first format, the data relating to a communication via the receiver means and may be operable to provide, in a second format, the portion of the data for display.

The device may further comprise means for disabling, when the application is active, a predetermined response to the receipt of data relating to a communication from a remote party.

According to some, but not necessarily all embodiments of the invention there is provided, a computer program which when loaded into a processor provides an application having at least a first state and a second state, the computer program comprising application control means for controlling the application to display data as an integral part of the application while the application is being used and interface means for receiving data relating to the communication and for initiating via the application control means the display of at least a portion of the data received as an integral part of the application while the application is being used.

The application control means may be operable to control the transition of the application between a first state in which the user participates in the active application to a second state in which data is displayed within the active application while the user participates in the active application.

The interface means may be operable to receive, in a first format, the data relating to a communication via the receiver means and may be operable to provide, in a second format, the portion of the data for display.

A physical entity may embody the computer program as described in the previous paragraphs.

According to some, but not necessarily all embodiments of the invention there is provided, a computer program which when loaded into a processor provides an interface to an application that has at least a first state in which a user can participate in the application and a second state in which data is displayed as an integral part of the application while the user participates in the application, the computer program comprising means for receiving data relating to a communication in a first format and means for initiating a change in the state of the application from the first state to the second state, said initiating providing, in a second format, at least a portion of the data relating to a communication for display within the active application while the user participates in the active application.

A physical entity may embody the computer program as described in the previous paragraphs.

According to some, but not necessarily all embodiments of the invention there is provided, a method of enabling communication from a remote party to a user of a communications device while the user participates in an active application at the communications device, the method comprising calling, in response to receipt at the communications device of data relating to a communication from a remote party, a first method for changing a first state of an application to a second state and for providing at least a portion of the data received to the application, calling, in response to a first event specified by application and carried out within the application, a second method for changing the second state of the application to the first state and calling, in response to user input specified by the application and carried out within the application, a third method for changing the second state of the application to a third state for enabling communication between the user of the communications device and the remote party.

A computer program which when loaded into a processor may enable the method as described in the previous paragraphs.

According to some, but not necessarily all embodiments of the invention there is provided, a computer program which when loaded into a processor of a device provides means for calling, in response to receipt at the device of data relating to a communication from a remote party, a first method for changing a first state of an application to a second state and for providing at least a portion of the data received to the application for display as an integral part of the application, means for calling, in response to a first event specified by the application, a second method for changing the second state of the application to the first state and means for calling, in response to user input specified by the application and carried out within the application, a third method for changing the second state of the application to a third state for enabling communication between the user of the device and the remote party.

A physical entity may embody the computer program as described in the previous paragraphs.

An electromagnetic signal may embody the computer program as described in the previous paragraphs.

According to some, but not necessarily all embodiments of the invention there is provided, a method of enabling communication from a remote party to a user of a communications device, comprising
receiving at the communications device data relating to a communication from the remote party,
if the user is participating in an active application at the communications device, displaying at least a portion of the received data within the active application while the user participates in the active application and
if the user is not participating in an active application at the communications device providing an audible alert to the user.

According to some, but not necessarily all embodiments of the invention there is provided, a method, device or computer program substantially as hereinbefore described and/or shown in the accompanying drawings.

## Claims

1. A method comprising:
receiving data in a first format at a first apparatus the data relating to a communication from a second apparatus;
forwarding, in a second format, at least a portion of the received data to an active application at the first apparatus for display.

2. The method of claim 1, wherein the first format is a non-standard format and the second format is a standard format useable by the active application.

3. The method of claims 1 or 2, further comprising controlling display of at least a portion of the forwarded data integrated within the active application while the user participates in the active application.

4. A method as claimed in claims 1, 2 or 3, further comprising changing the state of the application from a first state in which the user participates in the active application to a second state in which the at least a portion of the forwarded data is displayed integrated within the active application while the user participates in the active application.

5. A method as claimed in claim 4, further comprising changing, in response to a first defined user input to the device, the state of the active application from the second state to a third state for enabling communication between the first apparatus and the second apparatus.

6. A method as claimed in claim 5, wherein the third state enables communications to the second apparatus while the user participates in the active application.

7. A method as claimed in any one of claims 1 to 6, further comprising providing a communication interface for enabling communications to the second apparatus integrated within a user interface of the active application wherein the manner in which the communication interface is integrated within the user interface of the application varies from one application to another application.

8. A method as claimed in any one of claims 3 to 7, wherein the manner of displaying the at least a portion of the forwarded data integrated within the active application is dependent upon the communication type of the communication, the originator of the communication, the importance of the communication or the application which is active and varies from one application to another application.

9. A method as claimed in any one of claims 1 to 8, wherein the application is a game having game play and wherein the at least a portion of the forwarded data is merged to be part of the game itself without affecting the game directly.

10. A method as claimed in claim 9, wherein the at least a portion of the forwarded data is merged to be part of the game itself using a user gaming object.

11. A method as claimed in claims 9 or 10, wherein the manner in which the at least a portion of the forwarded data is merged to be part of the game itself varies from one game application to another game application.

12. An apparatus comprising:
means for receiving data in a first format relating to a communication from a second apparatus;
means for forwarding, in a second format, at least a portion of the received data to an active application at the apparatus for display.

13. An apparatus as claimed in claim 12, wherein the first format is a non-standard format and the second format is a standard format useable by the active application.

14. An apparatus as claimed in claims 12 or 13, further comprising means for controlling display of at least a portion of the forwarded data integrated within the active application while the user participates in the active application.

15. An apparatus as claimed in any one of claims 12 to 14, further comprising means for enabling communications to the second apparatus while the user participates in the active application.

16. An apparatus as claimed in any one of claims 12 to 15, further comprising means for providing a communication interface for enabling communications to the second apparatus integrated within a user interface of the active application wherein the manner in which the communication interface is integrated within the user interface of the application varies from one application to another application.

17. An apparatus as claimed in claim 14, wherein the application is a game having game play and wherein the means for controlling display of at least a portion of the forwarded data is configured to merge the at least a portion of the forwarded data to be part of the game itself without affecting the game directly.

18. An apparatus as claimed in claim 17, wherein the means for controlling display of a least a portion of the forwarded data is configured to merge the at least a portion of the forwarded data to be part of the game itself using a user gaming object.

19. An apparatus as claimed in any one of claims 11 to 17, wherein the apparatus is a mobile cellular telephone.

20. A computer program that when run on a computer performs at least the method of any one of claims 1 to 11.
